# EUROPEAN PATENT APPLICATION

(11) **EP 4 814 655 A1**
(43) Date of publication of application: **30.09.2026**
(21) Application number: 25225056.8
(22) Date of filing: 18.12.2025
(51) Int. Cl.: G06F 1/20, H05K 7/20

(54) **MULTI-LAYER THERMAL MANAGEMENT SYSTEM**

(30) Priority: 28.03.2025 US 202519903708
(71) Applicant: INTEL Corporation, Santa Clara, CA 95054 (US)
(72) Inventor: KU, Jeff, Taipei (TW); CHENG, Chi Chou, Taipei (TW); HO, Chung Jen, New Taipei (TW); HU, Chihtsung, New Taipei (TW); LIM, Min Suet, Penang (MY); LIN, Tsung-Kai, New Taipei (TW)
(74) Representative: Rummler, Felix

(57) **Abstract**

A thermal management system for an electronic device, including: a primary thermal conductivity spreader; a first heat-generating component thermally coupled to the primary thermal conductivity spreader; and a secondary thermal conductivity spreader layer positioned between the primary thermal conductivity spreader and a circuit board, wherein the secondary thermal conductivity spreader layer comprises a thermal conductivity spreader that is thermally coupled to the first heat-generating component and extends toward at least one additional heat-generating component having a lower thermal load than the first heat-generating component, wherein at least a portion of the secondary thermal conductivity spreader layer is disposed at a distance above the circuit board to define airflow channels.

## Description

### Background

Gaming laptops with discrete graphics processing units typically employ thermal modules consisting of a main heat spreader - either a vapor chamber or multiple heat pipes - along with structural components made of die-cast aluminum or copper. These components bridge gaps between the main heat spreader and secondary heat sources like video random access memory (VRAM) and voltage regulators, with a smaller thermal interface pad thickness to reduce overall thermal resistance.

The Esther Island (hyperbaric) architecture has gained widespread adoption among original equipment manufacturers due to its superior cooling capabilities and reduced acoustics compared to conventional evacuative-based laptop cooling solutions. However, when implementing this architecture in high-performance systems, testing revealed that while skin temperatures improved, junction temperatures could not match the original evacuative design due to reduced heat exchanger surface area.

A limitation of conventional approaches is thermal crosstalk between primary heat sources (e.g., great than 50W) and secondary components (e.g., less than 10W). Since all components share a single thermal module, cooling performance depends heavily on adequate airflow. When airflow is insufficient, primary component temperatures exceed expectations, and excess heat spreads to secondary components through thermal connections. This crosstalk effect can significantly impact overall thermal performance, particularly in systems where skin temperature limits (e.g., greater than 60°C) are reached due to design constraints, preventing further increases in power levels even when junction temperature margins remain.

### Brief Description of the Figures

FIG. 1A illustrates a block diagram of an electronic device with a Thermal Management System (TMS), in accordance with aspects of the disclosure.
FIG. 1B illustrates a perspective diagram of a thermal management system with a secondary vapor chamber layer, in accordance with aspects of the disclosure.
FIG. 1C illustrates an exploded perspective diagram of a thermal management system with a secondary vapor chamber layer, in accordance with aspects of the disclosure.
FIG. 1D illustrates a perspective diagram of a thermal management system with a secondary heat pipe layer, in accordance with aspects of the disclosure.
FIG. 1E illustrates an exploded perspective diagram of a thermal management system with a secondary heat pipe layer, in accordance with aspects of the disclosure.
FIG. 1F illustrates a Tai Chi symbol configuration, in accordance with aspects of the disclosure.
FIG. 2 illustrates a power load comparison table, in accordance with aspects of the disclosure.
FIG. 3A illustrates a perspective view of an electronic device with a thermal management system with a secondary vapor chamber layer, in accordance with aspects of the disclosure.
FIG. 3B illustrates a perspective view of an electronic device with a thermal management system with a secondary heat pipe layer, in accordance with aspects of the disclosure.
FIG. 4A illustrates a schematic diagram of an electronic device with primary and secondary vapor chamber layers, in accordance with aspects of the disclosure.
FIG. 4B illustrates a block diagram of the electronic device of FIG. 4A.
FIG. 5A illustrates a schematic diagram of an electronic device with a TMS with primary vapor chamber layer and secondary heat pipe layer, in accordance with aspects of the disclosure.
FIG. 5B illustrates a block diagram of the electronic device of FIG. 5A.
FIG. 6A illustrates a schematic diagram of an electronic device of a TMS with primary vapor chamber layer, secondary heat pipe layer, and a single processor, in accordance with aspects of the disclosure.
FIG. 6B illustrates a block diagram of the electronic device of FIG. 5A.
FIG. 7 illustrates a perspective diagram with a thermal management system having continuous primary and secondary heat pipe layers, in accordance with aspects of the disclosure.
FIG. 8 illustrates a table presenting simulation results of a thermal management system, in accordance with aspects of the disclosure.

### Detailed Description

The present disclosure is directed to a thermal management system for an electronic device. The system includes a primary thermal conductivity spreader thermally coupled to a heat-generating component. A secondary thermal conductivity spreader layer is positioned between the primary spreader and a circuit board. This secondary thermal conductivity spreader layer is also thermally coupled to the heat-generating component and extends toward at least one additional, lower-power heat-generating component. Additionally, at least part of the secondary thermal conductivity spreader layer is disposed at a distance above the circuit board to create airflow channels that enhance thermal dissipation.

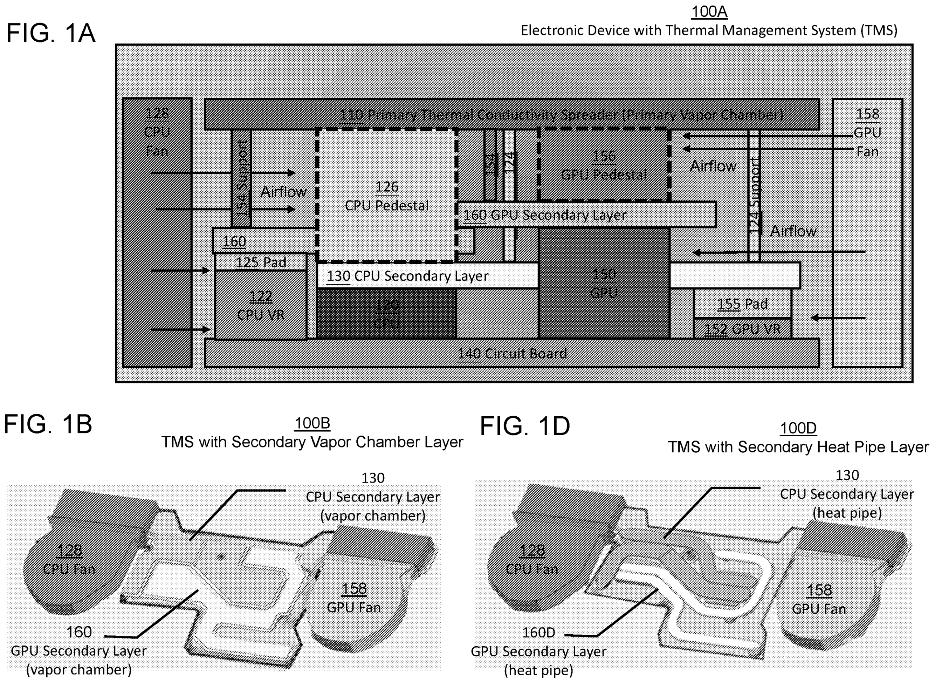

FIG. 1A illustrates a block diagram of an electronic device 100A with a thermal management system (TMS), in accordance with aspects of the disclosure.

The electronic device 100A includes a TMS with a primary thermal conductivity spreader 110, which may be implemented as a vapor chamber, planar heat spreader composed of multiple heat pipes, planar synthetic spreader, or other high thermal conductivity spreading structure. The primary thermal conductivity spreader 110, which in this example is a vapor chamber, is thermally coupled to multiple components, including a heat-generating component (CPU 120) through a CPU pedestal 126 and another heat-generating component (GPU 150) through a GPU pedestal 156.

The electronic device 100A includes a CPU fan 128 positioned near the CPU 120 and a GPU fan 158 positioned near the GPU 150 to provide airflow for cooling. Supports 124 and 154 help maintain the positioning and thermal contact of the components.

Between the primary thermal conductivity spreader 110 and the circuit board 140 is a secondary thermal conductivity spreader layer comprising two discrete partitions-a CPU secondary thermal conductivity spreader layer 130 and a GPU thermal conductivity spreader layer 160-arranged in a complementary configuration to facilitate thermal load balancing among multiple heat-generating components. The CPU secondary thermal conductivity spreader layer 130 extends horizontally from the CPU fan 128 toward the GPU fan 158 to access airflow from both fans while cooling the CPU 120 (approximately 95W) and additional or auxiliary components with lower thermal loads, such as the CPU voltage regulators 122 (approximately 25W) and VRAM (approximately 25W, not shown). Similarly, the GPU secondary thermal conductivity spreader layer 160 extends horizontally from the GPU fan 158 toward the CPU fan 128 while cooling the GPU 150 (approximately 130W) and lower thermal load components such as the GPU voltage regulators 152 (approximately 15W).

The secondary thermal conductivity spreader layer is thermally coupled to the heat-generating components, CPU 120 and GPU 150, only at their primary contact areas through pedestals 126, 156 or thermal interface structures and is mechanically supported at strategic support points by supports 124, 154. The secondary thermal conductivity spreader layer remains disposed at a distance between these connection points to create channels for airflow beneath the secondary heat spreader layer, increasing the surface area available for heat exchange.

Additional components include thermal interface pads 125 and 155 to facilitate heat transfer between the components. The entire assembly is mounted on circuit board 140.

The arrangement allows for efficient heat dissipation through both the primary thermal conductivity spreader 110 and the elevated secondary thermal conductivity spreader layer while enabling airflow through the channels created by the elevated design. This multi-layer configuration, which is not limited to two layers, helps reduce thermal crosstalk between high-power components (CPU/GPU) and lower-power components (VRs/VRAM) while increasing the available surface area for heat exchange.

While electronic device 100A may comprise a laptop computer, electronic device 100A could include other computing devices that require efficient thermal management of one or more heat-generating components. The thermal management system could be implemented in high-performance tablets or convertible devices that contain processing components requiring thermal management. The technology is also applicable to workstations and small form factor desktop computers where space constraints and thermal management are critical. Additionally, the thermal management system can be used in gaming consoles or compact entertainment systems that generate significant heat from processors and graphics components. Mobile workstations used for professional applications like video editing, 3D rendering, or computer-aided design that have high thermal loads can also benefit from this thermal management approach. The electronic device 100A may have heat-generating components (e.g., processors >50W) along with lower-power components (e.g., <10W) that benefit from the thermal management system's ability to reduce crosstalk and provide efficient cooling through the multi-layer design.

FIGs. 1B-1E illustrate perspective views of thermal management systems with different implementations of the secondary thermal conductivity spreader layer, in accordance with aspects of the disclosure.

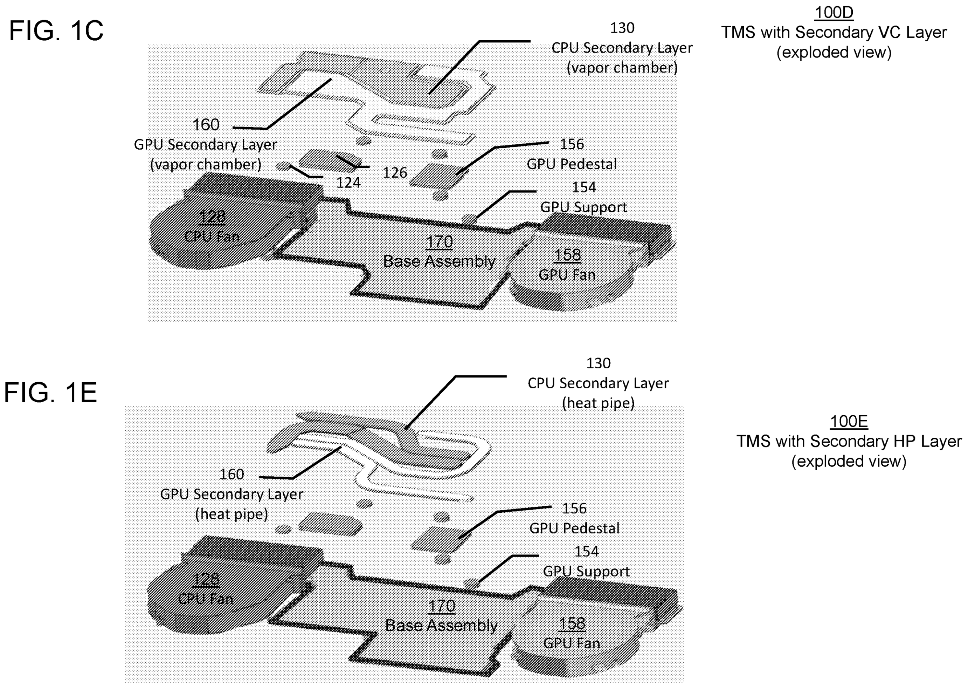

In FIGs. 1B and 1C, the TMS 100B, 100C includes a CPU secondary thermal conductivity spreader layer 130B and a GPU secondary thermal conductivity spreader layer 160B implemented as vapor chambers. The exploded view in FIG. 1C shows how these vapor chambers integrate with the base assembly 170, along with the CPU pedestal 126, GPU pedestal 156, and supports 124 and 154.

In FIGs. 1D and 1E, the TMS 100D, 100E includes a CPU secondary thermal conductivity spreader layer 130D and a GPU secondary thermal conductivity spreader layer 160D implemented as heat pipes. The exploded view in FIG. 1E illustrates how these heat pipe layers integrate with the same base assembly and additional components.

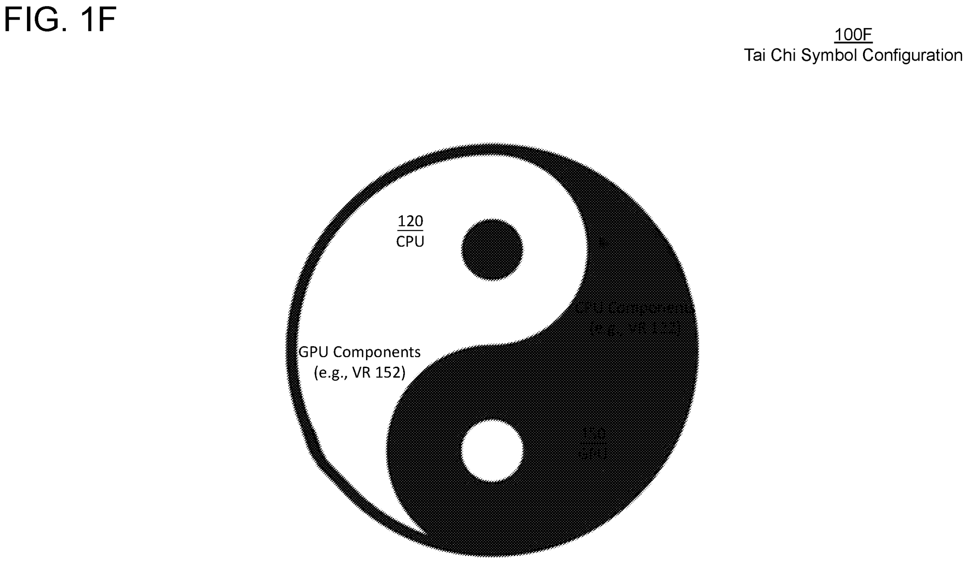

FIG. 1F illustrates a Tai Chi symbol configuration 100F that represents the complementary thermal management arrangement of the discrete partitions of the secondary thermal conductivity spreader layer, in accordance with aspects of the disclosure.

This Tai Chi symbol configuration 100F optimizes heat distribution and cooling efficiency through strategic component placement and airflow routing. The balanced design helps prevent thermal hotspots while increasing the cooling capability of both fans through shared airflow access.

The Tai Chi symbol configuration 100F includes, in this example, a CPU partition and associated CPU components (e.g., VR 122) arranged in a complementary pattern with a GPU partition and associated GPU components (e.g., VR 152). This complementary configuration facilitates balanced thermal load distribution between the different heat-generating components.

The Tai Chi symbol configuration 100F is specifically designed to achieve two key thermal management objectives. First, it enables balanced cooling capability by sharing thermal loads between the CPU and GPU partitions. Since the GPU t150 typically generates significantly more heat (120-175W) compared to the CPU (55-100W), routing a portion of the GPU thermal load to the CPU thermal conductivity spreader layer 130 helps achieve more uniform heat distribution compared to dedicated CPU/GPU partition designs. Second, the complementary arrangement allows each partition's secondary thermal conductivity spreader layer to access airflow from both the CPU and GPU fans 128, 158, enabling more effective cooling through increased air exposure.

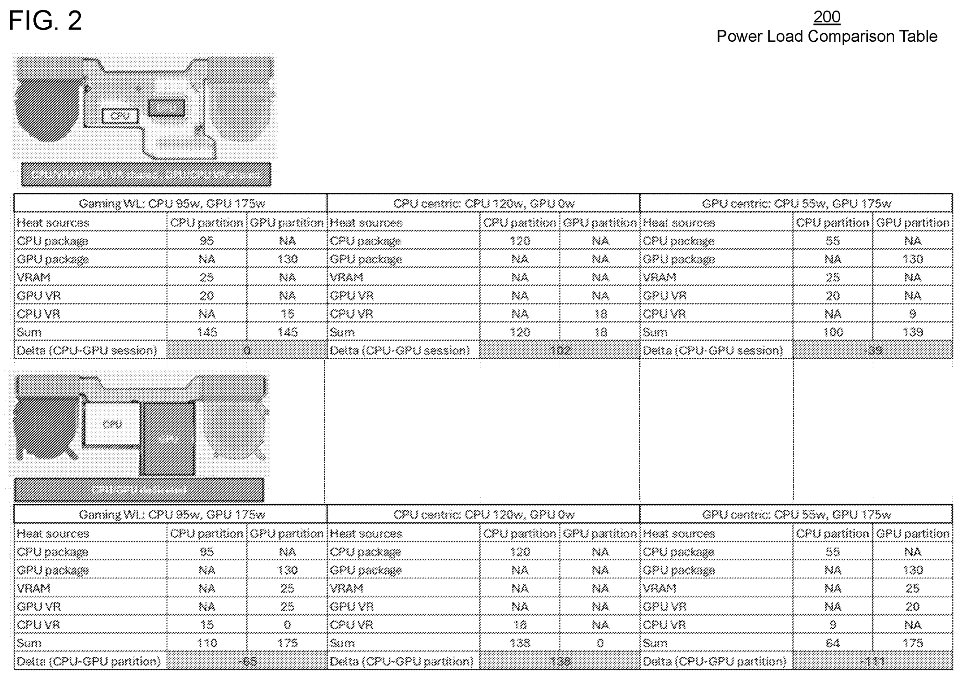

FIG. 2 illustrates a power load comparison table 200 having thermal load distribution between different configurations of the secondary thermal conductivity spreader layer, in accordance with aspects of the disclosure.

The table 200 compares power load distributions between two different configurations: (1) a shared spreader partition design as disclosed herein, where CPU/VRAM/GPU VR components share one partition and GPU/CPU VR components share another partition (disclosed thermal management system in upper half of figure), and (2) a dedicated spreader partition design where CPU and GPU components each have their own dedicated partitions (conventional thermal management system in lower half of figure). The comparison is shown across three different operating scenarios: a gaming workload with CPU at 95W and GPU at 175W, a CPU-centric workload with CPU at 120W and GPU at 0W, and a GPU-centric workload with CPU at 55W and GPU at 175W.

The shared partition configuration in the upper portion of the figure demonstrates more balanced thermal loads between the partitions compared to the dedicated configuration in the lower portion of the figure. For example, during gaming workloads, the shared configuration achieves equal 145W loads in both partitions, while the dedicated configuration results in an unbalanced distribution of 110W and 175W. This balanced distribution, inspired by the Tai Chi symbol configuration, enables more efficient thermal management by allowing each partition to access airflow from both fans while maintaining improved heat distribution across the system.

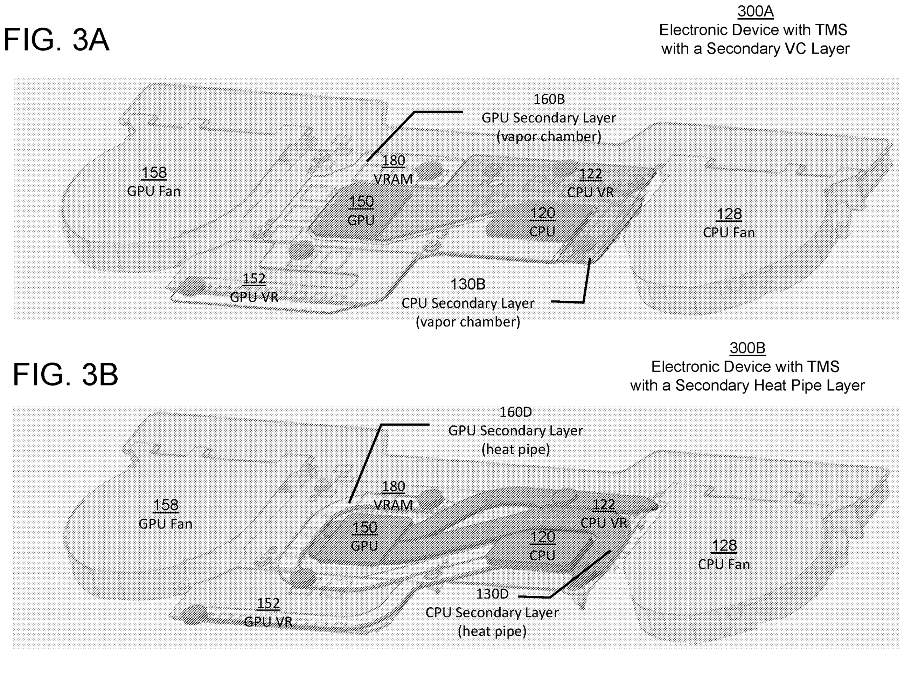

FIGs. 3A and 3B illustrate electronic devices 300A, 300B with different perspective views of the thermal management system, in accordance with aspects of the disclosure.

FIG. 3A shows an electronic device 300A incorporating a vapor chamber-based secondary thermal conductivity spreader layer configuration. The electronic device 300A includes a CPU 120 thermally coupled to a CPU secondary thermal conductivity spreader layer 130B implemented as a vapor chamber, and a GPU 150 thermally coupled to a GPU secondary thermal conductivity spreader layer 160B also implemented as a vapor chamber. Additional components include a CPU voltage regulator 122, GPU voltage regulator 152, and VRAM 180, which are thermally managed through the secondary vapor chamber layers. The CPU fan 128 and GPU fan 158 provide airflow for cooling both the primary and secondary thermal conductivity spreader layers.

FIG. 3B shows an electronic device 300B incorporating a heat pipe-based secondary thermal conductivity spreader layer configuration. The electronic device 300B includes the same core components (CPU 120, GPU 150, voltage regulators 122, 152, and VRAM 180) but utilizes CPU secondary thermal conductivity spreader layer 130D and GPU secondary thermal conductivity spreader layer 160D implemented as heat pipes instead of vapor chambers.

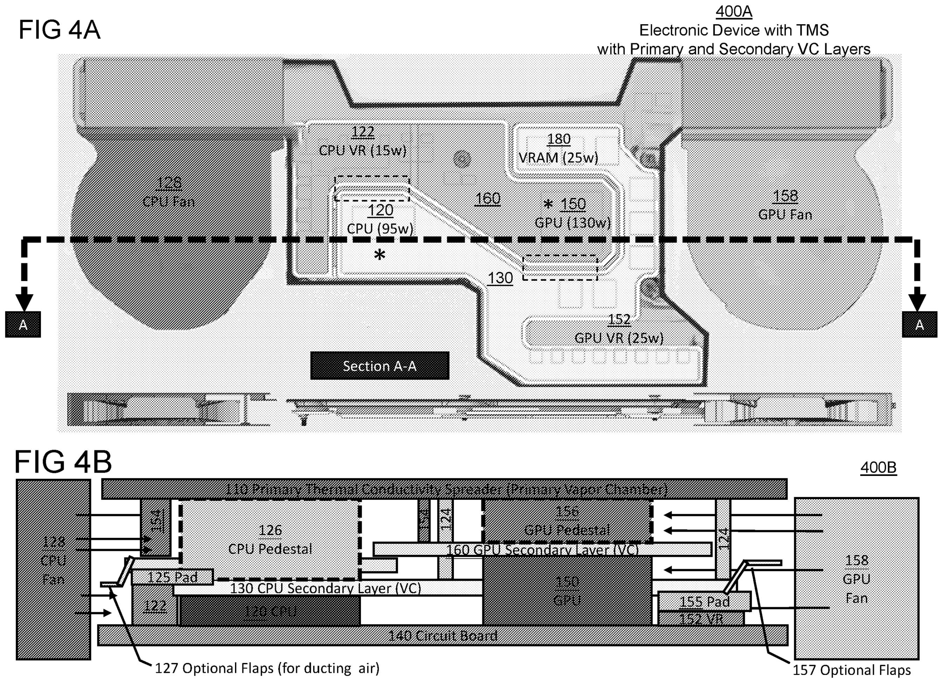

FIG. 4A illustrates a schematic diagram of an electronic device 400A with primary and secondary vapor chamber layers, including a cross-sectional view (Section A-A) illustrating the layered arrangement of the thermal management system, in accordance with aspects of the disclosure. FIG. 4B illustrates a block diagram of the electronic device of FIG. 4A.

The electronic device 400 (400A/400B) includes a primary thermal conductivity spreader 110 and secondary vapor chamber layers arranged in a complementary configuration. The CPU secondary thermal conductivity spreader layer 130 and GPU secondary thermal conductivity spreader layer 160 can optionally be made continuous with each other at the dashed rectangular regions shown in the figure, creating a shared vapor path between the CPU and GPU cooling zones. Additionally, the asterisk "*" marks indicate locations where the secondary vapor chambers can optionally be made continuous with the primary thermal conductivity spreader (vapor chamber) 110, enabling direct vapor transfer between the primary and secondary thermal conductivity spreader layers. Shared vapor paths further enhance heat transfer between different zones of the thermal management system. This continuity between chambers, both horizontally between the secondary thermal conductivity spreader layer and vertically with the primary thermal conductivity spreader 110, improves overall thermal performance by enabling more efficient heat distribution.

Optional flaps 127, 157, shown in FIG. 4B, are provided for ducting airflow from the CPU fan 128 and GPU fan 158. The secondary thermal conductivity spread (vapor chamber) layers 130, 160 are disposed at a distance above the circuit board 140 to create channels for airflow, while being supported at discrete points by supports 124.

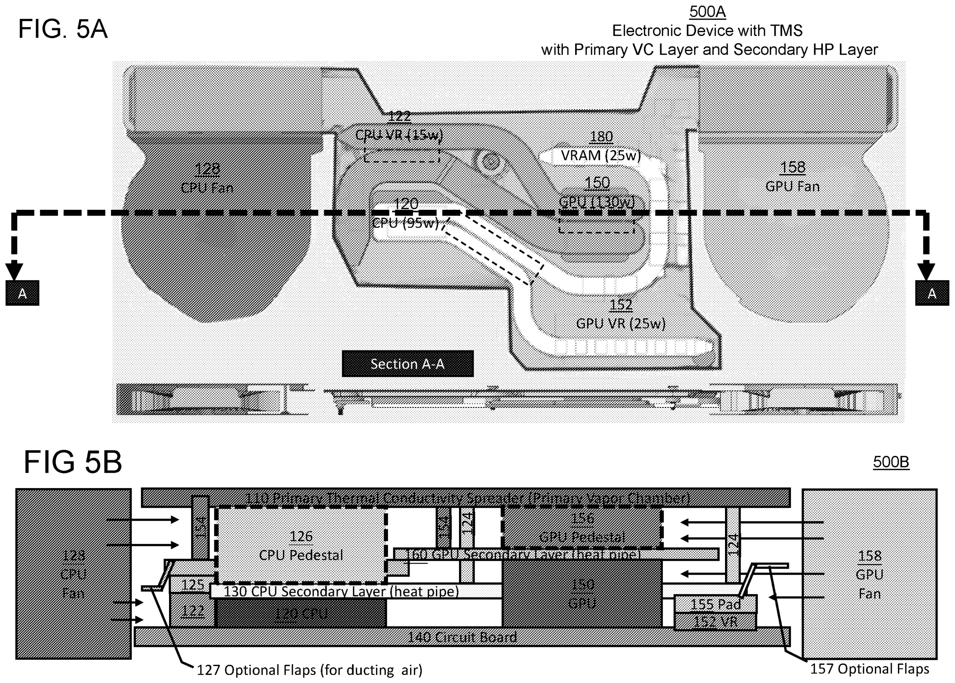

FIG. 5A illustrates a schematic diagram of an electronic device with a thermal management system with primary thermal conductivity spreader 110 that includes a vapor chamber and a secondary heat pipe layer, including a cross-sectional view (Section A-A) illustrating the layered arrangement of the thermal management system, in accordance with aspects of the disclosure. FIG. 5B illustrates a block diagram of the electronic device of FIG. 5A.

The electronic device 500A includes a primary thermal conductivity spreader 110 and heat pipe-based secondary layers arranged in a complementary configuration instead of vapor chambers. Similar to the vapor chamber implementation shown in Figures 4A/4B, the CPU secondary thermal conductivity layer 130 and GPU secondary thermal conductivity layer 160 are heat pipes that extend toward opposite fans 128, 158 to facilitate thermal load balancing.

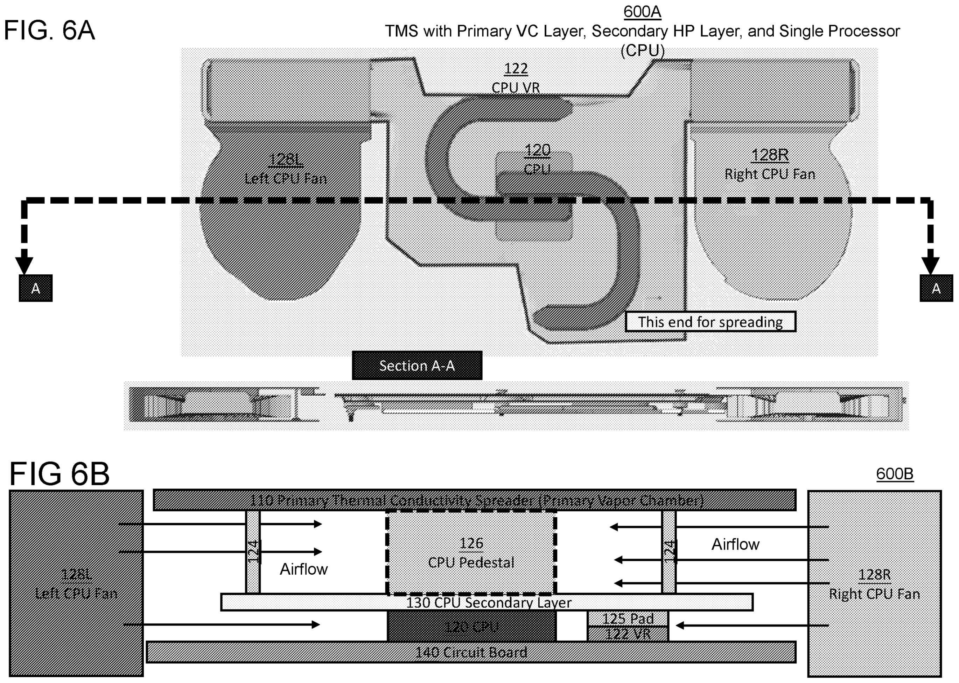

FIG. 6A illustrates a schematic diagram of an electronic device of a thermal management system with a primary thermal conductivity spreader 110 that includes a vapor chamber, secondary heat pipe layer, and a single processor, in accordance with aspects of the disclosure. FIG. 6B illustrates a block diagram of the electronic device of FIG. 6A.

The electronic device 600A illustrates a single CPU-only configuration of the thermal management system, featuring a primary thermal conductivity spreader 110 and a heat pipe-based secondary layer designed specifically for a single processor setup. The system includes left and right CPU fans (128L, 128R) positioned on opposite sides to provide balanced airflow.

The secondary layer heat pipe extends in an S-shaped pattern from the CPU area toward both leaft and right CPU fans 128L, 128R, increasing the heat dissipation capability by accessing airflow from both directions.

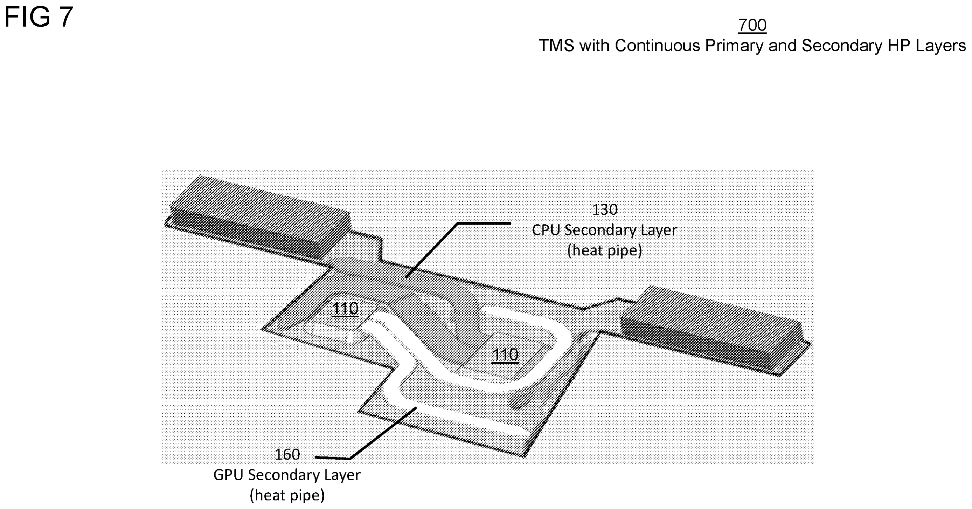

FIG. 7 illustrates a perspective diagram with a thermal management system having continuous primary and secondary heat pipe layers, in accordance with aspects of the disclosure.

The TMS 700 has the secondary thermal conductivity spreader layers 130, 160 that are continuous with the primary thermal conductivity spreader 110. The CPU secondary thermal conductivity spreader layer 130 and GPU secondary thermal conductivity spreader layer 160D heat pipes are directly integrated with the primary thermal conductivity spreader 110, creating a continuous vapor path between all layers.

This configuration enables direct vapor transfer between the primary and secondary thermal conductivity spreader layers without requiring separate thermal interfaces or pedestals. The continuous connection between the layers occurs at the heat source locations, allowing for more efficient heat transfer from the CPU and GPU to both the primary vapor chamber and secondary thermal conductivity spreader layers 130, 160.

The continuous vapor path enables heat to spread more efficiently throughout the entire thermal management system, taking advantage of both the primary thermal conductivity spreader's spreading capability and the secondary thermal conductivity spreader layers' ability to transport heat to the fan regions.

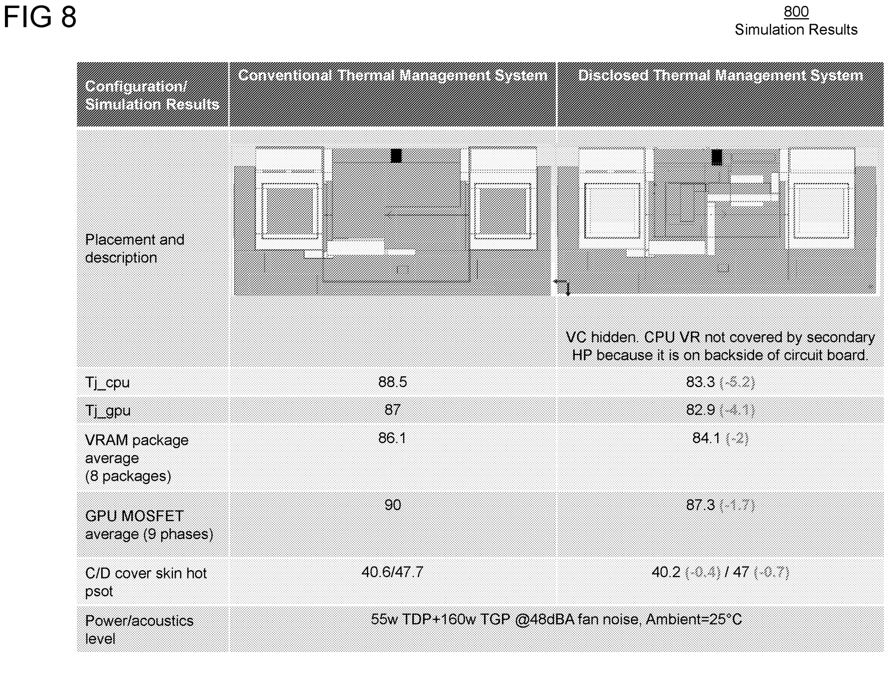

FIG 8 illustrates a table 800 presenting simulation results of a thermal management system, in accordance with aspects of the disclosure.

The simulation results compare thermal performance between a conventional system and the disclosed thermal management system.

The disclosed thermal management system significantly reduced junction temperature (Tj) and moderately lower average temperatures for the VRAM and MOSFET components, as compared to the conventional system. These results indicate that the disclosed thermal management system enhances thermal dissipation from the primary heat source by increasing the effective heat exchange surface area and mitigating thermal crosstalk between the primary and secondary heat-generating components. Additionally, the skin temperature of the device exhibited slight improvement due to the overall reduction in component temperatures. Identical fan configurations were used in both models; thus, acoustic performance (e.g., fan noise levels) is expected to remain unchanged.

In conclusion, the disclosed thermal management system is specifically designed to enhance the performance of Esther Island- and Hyperbaric-based systems. The TMS not only achieves thermal performance on par with leading evacuative cooling solutions but also provides a novel and efficient implementation strategy for integrating such architectures into high-performance gaming laptops and professional workstations.

While specific aspects have been described, the thermal management system is not limited to any particular number or configuration of components. The system may include any number of secondary thermal conductivity spreader layers positioned between the primary thermal conductivity spreader and circuit board. The system can be implemented with a single processor as shown in the CPU-only configuration, multiple processors like the CPU+GPU configuration, or other combinations of heat-generating components. The secondary thermal conductivity spreader layers can be configured to cool various types and combinations of heat-generating components, including but not limited to central processing units, graphics processing units, voltage regulators, memory components, and other ancillary components having different thermal loads. The thermal conductivity spreaders may be implemented using vapor chambers, heat pipes, or other thermal spreading technologies in various combinations. The specific dimensions, materials, thermal loads, and arrangement of components can be modified while maintaining the principles and advantages of the floating double deck thermal solution.

Conventional thermal management systems in gaming laptops generally rely on a large vapor chamber soldered to multiple copper and die-cast aluminum components, which bridge the heat sources to the vapor chamber. While this approach is common in traditional evacuative designs, it suffers from several key drawbacks. These include thermal crosstalk between CPU/GPU and VRAM/VR components-resulting in elevated operating temperatures-as well as increased inbound airflow resistance due to solid structural elements blocking airflow between the vapor chamber and the main circuit board. Additionally, these systems offer limited surface area for effective heat exchange, restricting overall cooling performance.

The disclosed thermal design addresses these shortcomings through a number of improvements. It reduces thermal crosstalk by rerouting the heat transfer path and increasing the available heat exchanging surface area, particularly within the space between the main circuit board and the thermal module. This enhances cooling efficiency across heat sources, resulting in lower operating temperatures and improved thermal margins. Furthermore, the design increases the air gap, which lowers inbound airflow resistance and enhances heat dissipation performance. These enhancements not only benefit junction temperatures (Tj) but also contribute to reduced skin temperature, improving user experience.

Further, the aspects of the disclosure solve the challenge of limited heat exchanger surface area in Esther Island-based designs, enabling them to match or even exceed the cooling capabilities of traditional evacuative systems that rely on significantly larger heat exchanger volumes. This results in improved thermal performance at the same acoustic level or, alternatively, lower fan noise at the same skin temperature-delivering a more comfortable and quiet user experience. These advantages are especially desirable for high-performance laptop platforms employing advanced thermal design strategies such as Hyperbaric and Esther Island systems.

The techniques of this disclosure may also be described in the following examples.

Example 1. A thermal management system for an electronic device, comprising: a primary thermal conductivity spreader; first heat-generating component thermally coupled to the primary thermal conductivity spreader; and a secondary thermal conductivity spreader layer positioned between the primary thermal conductivity spreader and a circuit board, wherein the secondary thermal conductivity spreader layer comprises a thermal conductivity spreader that is thermally coupled to the first heat-generating component and extends toward at least one additional heat-generating component having a lower thermal load than the first heat-generating component, wherein at least a portion of the secondary thermal conductivity spreader layer is disposed at a distance above the circuit board to define airflow channels.

Example 2. The thermal management system of example 1, wherein the secondary thermal conductivity spreader layer is thermally coupled to the primary thermal conductivity spreader through a continuous pedestal extending from the primary thermal conductivity spreader or through a separate thermal interface structure.

Example 3. The thermal management system of any one or more of examples 1-2, wherein the secondary thermal conductivity spreader layer comprises first and second partitions arranged in a complementary configuration to facilitate thermal load balancing between different heat-generating components.

Example 4. The thermal management system of example 3, wherein the first partition is configured to cool a central processing unit and associated components and the second partition is configured to cool a graphics processing unit and associated components.

Example 5. The thermal management system of example 3, wherein the complementary configuration comprises a Tai Chi symbol configuration.

Example 6. The thermal management system of any one or more of examples 1-5, further comprising: a first fan positioned near a first end of the electronic device; and a second fan positioned near a second end of the electronic device, wherein the secondary thermal conductivity spreader layer extends between the first end and the second end to receive airflow from both fans.

Example 7. The thermal management system of any one or more of examples 1-6, wherein the secondary thermal conductivity spreader layer is mechanically supported at one or more support points while remaining at the distance between the support points to increase airflow through the airflow channels.

Example 8. The thermal management system of any one or more of examples 1-7, wherein the first heat-generating component comprises a processing unit having a power level greater than about 50W, and the at least one additional heat-generating component comprises an ancillary component having a power level less than about 10W.

Example 9. The thermal management system of any one or more of examples 1-8, wherein the secondary thermal conductivity spreader layer is configured to reduce thermal crosstalk between the first heat-generating component and the at least one additional heat-generating component.

Example 10. The thermal management system of any one or more of examples 1-9, wherein the first heat-generating component comprises a processing unit, and the at least one additional heat-generating component is an ancillary component.

Example 11. The thermal management system of any one or more of examples 1-10, wherein the secondary thermal conductivity spreader layer is thermally coupled to the first heat-generating component at a primary contact area and mechanically supported at one or more support points while remaining at the distance between the support points.

Example 12. The thermal management system of any one or more of examples 1-11, wherein the secondary thermal conductivity spreader layer comprises partitions for independently cooling different sets of components.

Example 13. The thermal management system of any one or more of examples 1-12, wherein the secondary thermal conductivity spreader layer comprises a first thermal conductivity spreader and a second thermal conductivity spreader for primarily cooling different sets of components, wherein the first thermal conductivity spreader and the second thermal conductivity spreader have a continuous vapor path.

Example 14. The thermal management system of any one or more of examples 1-13, wherein the secondary thermal conductivity spreader layer comprises a vapor chamber that has a continuous vapor path with the primary thermal conductivity spreader.

Example 15. An electronic device, comprising: the thermal management system of example 1.

Example 16. The electronic device of example 15, wherein the electronic device comprises a laptop computer.

Example 17. A thermal management system, comprising: a primary thermal conductivity spreader; first and second fans positioned on opposite sides of the primary thermal conductivity spreader; and a secondary thermal conductivity spreader layer positioned between the primary thermal conductivity spreader and a circuit board, and comprising first and second thermal conductivity spreaders arranged in a complementary configuration, wherein the first thermal conductivity spreader extends from a first heat source toward the second fan, and the second thermal conductivity spreader extends from a second heat source toward the first fan.

Example 18. The thermal management system of example 17, wherein the complementary configuration comprises a Tai Chi symbol configuration to facilitate thermal load balancing between the first and second heat sources.

Example 19. The thermal management system of any one or more of examples 17-18, wherein the first thermal conductivity spreader is configured to cool a central processing unit and associated components, and the second thermal conductivity spreader is configured to cool a graphics processing unit and associated components.

Example 20. The thermal management system of any one or more of examples 17-19, wherein the first thermal conductivity spreader is configured to handle a first thermal load, and the second thermal conductivity spreader is configured to handle a second thermal load that is greater than the first thermal load.

Although specific aspects have been illustrated and described herein, it will be appreciated by those of ordinary skill in the art that a variety of alternate and/or equivalent implementations may be substituted for the specific aspects shown and described without departing from the scope of the present application. This application is intended to cover any adaptations or variations of the specific aspects discussed herein.

## Claims

1. A thermal management system for an electronic device, comprising:
a primary thermal conductivity spreader;
a first heat-generating component thermally coupled to the primary thermal conductivity spreader; and
a secondary thermal conductivity spreader layer positioned between the primary thermal conductivity spreader and a circuit board, wherein the secondary thermal conductivity spreader layer comprises a thermal conductivity spreader that is thermally coupled to the first heat-generating component and extends toward at least one additional heat-generating component having a lower thermal load than the first heat-generating component,
wherein at least a portion of the secondary thermal conductivity spreader layer is disposed at a distance above the circuit board to define airflow channels.

2. The thermal management system of claim 1, wherein the secondary thermal conductivity spreader layer is thermally coupled to the primary thermal conductivity spreader through a continuous pedestal extending from the primary thermal conductivity spreader or through a separate thermal interface structure.

3. The thermal management system of any one or more of claims 1-2, wherein the secondary thermal conductivity spreader layer comprises first and second partitions arranged in a complementary configuration to facilitate thermal load balancing between different heat-generating components.

4. The thermal management system of any one or more of claims 1-3, wherein the first partition is configured to cool a central processing unit and associated components and the second partition is configured to cool a graphics processing unit and associated components.

5. The thermal management system of any one or more of claims 1-4, wherein the complementary configuration comprises a Tai Chi symbol configuration.

6. The thermal management system of any one or more of claims 1-5, further comprising:
a first fan positioned near a first end of the electronic device; and
a second fan positioned near a second end of the electronic device,
wherein the secondary thermal conductivity spreader layer extends between the first end and the second end to receive airflow from both fans.

7. The thermal management system of any one or more of claims 1-6, wherein the secondary thermal conductivity spreader layer is mechanically supported at one or more support points while remaining at the distance between the support points to increase airflow through the airflow channels.

8. The thermal management system of any one or more of claims 1-7, wherein the first heat-generating component comprises a processing unit having a power level greater than about 50W, and the at least one additional heat-generating component comprises an ancillary component having a power level less than about 10W.

9. The thermal management system of any one or more of claims 1-8, wherein the secondary thermal conductivity spreader layer is configured to reduce thermal crosstalk between the first heat-generating component and the at least one additional heat-generating component.

10. The thermal management system of any one or more of claims 1-9, wherein the first heat-generating component comprises a processing unit, and the at least one additional heat-generating component is an ancillary component.

11. The thermal management system of any one or more of claims 1-10, wherein the secondary thermal conductivity spreader layer is thermally coupled to the first heat-generating component at a primary contact area and mechanically supported at one or more support points while remaining at the distance between the support points.

12. The thermal management system of any one or more of claims 1-11, wherein the secondary thermal conductivity spreader layer comprises partitions for independently cooling different sets of components.

13. The thermal management system of any one or more of claims 1-12, wherein the secondary thermal conductivity spreader layer comprises a first thermal conductivity spreader and a second thermal conductivity spreader for primarily cooling different sets of components, wherein the first thermal conductivity spreader and the second thermal conductivity spreader have a continuous vapor path.

14. The thermal management system of any one or more of claims 1-13, wherein the secondary thermal conductivity spreader layer comprises a vapor chamber that has a continuous vapor path with the primary thermal conductivity spreader.

15. An electronic device, comprising:
the thermal management system of any one or more of claims 1-14.
